## Europäisches Patentamt
## European Patent Office
## Office européen des brevets

(19)

(11) Veröffentlichungsnummer: **0 241 658**
**B1**

(12) **EUROPÄISCHE PATENTSCHRIFT**

(45) Veröffentlichungstag der Patentschrift:
04.04.90

(51) Int. Cl.⁴: **G03B 27/18**

(21) Anmeldenummer: **87101697.8**

(22) Anmeldetag: **07.02.87**

(54) Kontaktkopiergerät.

(30) Priorität: **01.04.86 DE 3610863**

(43) Veröffentlichungstag der Anmeldung:
**21.10.87 Patentblatt 87/43**

(45) Bekanntmachung des Hinweises auf die Patenterteilung:
**04.04.90 Patentblatt 90/14**

(84) Benannte Vertragsstaaten:
**AT BE CH DE ES FR GB GR IT LI LU NL SE**

(56) Entgegenhaltungen:
**DE-B- 2 549 989**
**FR-A- 2 512 971**

(73) Patentinhaber: **THEIMER, Siegfried, Rohler Strasse 12,
D-6484 Birstein(DE)**

(72) Erfinder: **THEIMER, Siegfried, Rohler Strasse 12,
D-6484 Birstein(DE)**

(74) Vertreter: **Nix, Frank Arnold, Dr., Kröckelbergstrasse 15,
D-6200 Wiesbaden(DE)**

## Beschreibung

Die vorliegende Erfindung bezieht sich auf ein Kontaktkopiergerät gemäß dem Oberbegriff des Patentanspruch 1. Ein Kontaktkopiergerät dieser Gattung ist aus der DE-A 32 34 515 bekannt. Die Absenkbarkeit des Schlittens in seiner Aufrollage macht die Bedienung des Geräts leichter und bequemer, weil die Bedienungsperson vor dem vorderen Rand des Gehäuses steht und sich zum Auflegen der Kopierpartner, also zuerst der Kopiervorlage (gewöhnlich ein Filmnegativ) und danach des Fotomaterials(z. B. eine unbelichtete Offsetdruckplatte) nach vorn über die Glasplatte beugen muß. Der Schlitten in seiner oberen Stellung würde dabei stören.

Nachteilig ist bei der bekannten Ausbildung jedoch die Kompliziertheit der Bewegungskinematik des Schlittens. Dieser ist beidseis an nach unten ragenden Verschiebestangen befestigt, die in Gleitstücken vertikal geführt sind, welche ihrerseits längs der Führungsschienen verschieblich sind. Das nach unten aus dem Gleitstück vorragende Ende jeder Verschiebestange ist an einem Glied einer endlosen Kette angeschlossen, welche über eine Mehrzahl von Umlenkrädern umläuft und dabei ein etwa waagerechtes und ein senkrechtes Trum aufweist.

Wenn sich das Anschlußkettenglied auf dem waagerechten Abschnitt bewegt, wird der Schlitten auf gleicher Höhe bleibend waagerecht verfahren, nämlich längs der Glasplatte, und wenn das Anschlußkettenglied dann in das senkrechte Trum überläuft und sich abwärts bewegt, kommt auch die Horizontalbewegung des Schlittens zum Stillstand, und dieser wird nur noch um einen entsprechenden Weg abwärts bewegt.

Die doppelt vorhandenen kreuzweisen Führungen und Kettenkinematiken macht diese bekannte Ausbildung kompliziert und wartungsintensiv.

Aufgabe der Erfindung ist demgemäß die Schaffung eines Belichtungsgeräts der gattungsgemäßen Bauart, bei dem die die Absenkbarkeit des Schlittens erlaubende konstruktive Gestaltung einfach und robust ist, und somit eine auch bei rauher Behandlung große Betriebszuverlässigkeit und hohe Lebensdauer erzielt wird.

Die gestellte Aufgabe wird erfindungsgemäß durch die im kennzeichnenden Teil des Patentanspruchs 1 genannten Merkmale gelöst. Weitere Erfindungsausbildungen sind in den Unteransprüchen angegeben.

Die Erfindung wird nachfolgend durch die Beschreibung eines Ausführungsbeispiels an Hand der beigegebenen Zeichnungen weiter erläutert. Es zeigt:

    Fig. 1 das Kontaktkopiergerät in perspektivischer Draufsicht;

    Fig. 2 die Seitenansicht beim Auflegen der Kopierpartner;

    Fig. 3 die Seitenansicht nach dem Hochschwenken des Mattenschlittens;

    Fig. 4 die Seitenansicht nach dem Ausfahren des Mattenschlittens;

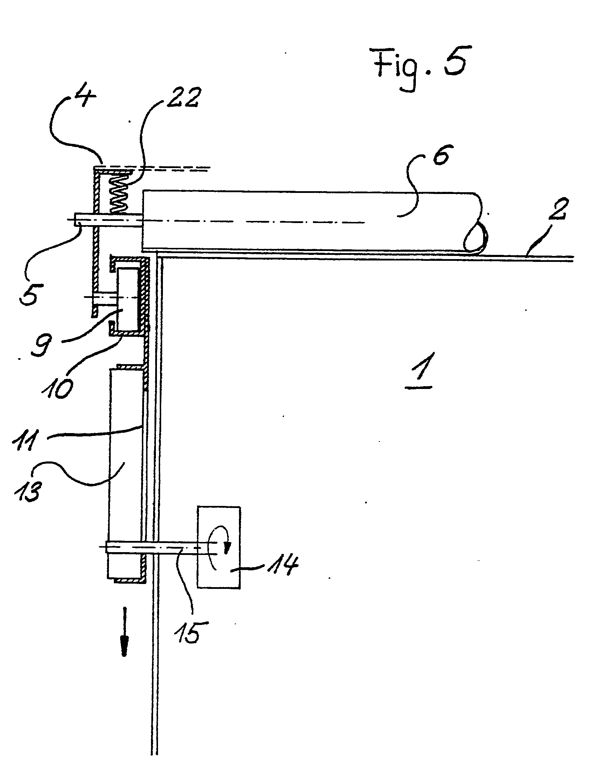

    Fig. 5 die Stirnansicht, teilweise geschnitten.

In einem Gehäuse 1 befindet sich eine aufwärts zu einer Glasplatte 2 hin strahlende Lichtquelle zur Belichtung von auf diese aufzulegenden Kopierpartnern 3, nämlich eines obenliegenden Fotomaterials, z. B. einer Offsetdruckplatte, durch eine untenliegende Kopiervorlage hindurch.

Über die Glasplatte 2 ist ein Schlitten 4 verfahrbar, in dem sich eine auf eine Walze 5 zu einem Wickel 6 aufwickelbare Gummimatte 7 befindet.

Die Wickelwalze 5 ist in beidseits angeordneten Schlittenwangen 8 gelagert, welche ihrerseits mittels je zweier Schlittenrollen 9 in Tandemanordnung in Führungsschienen 10 mit U-Profil verschieblich sind. Dadurch ist die Beibehaltung der senkrechten Ausrichtung der Schlittenwangen 8 während der Verschiebung gewährleistet.

Jede Führungsschiene 10 ist an einem Schwenkarm 11 befestigt, der um eine in der Nähe des hinteren Randes gelegene Schwenkachse 12 schwenkbar ist. In der Nähe des vorderen Randes hat jeder Schwenkarm 11 eine U-profilartige Ausbildung, in der ein Exzenter 13 angeordnet ist. Dieser sitzt auf einer von einem Motor 14 antreibbaren Achse 15 und bewegt bei seinem Umlauf das von ihm gehaltene Ende des Schwenkarms 11 zwischen einer oberen und einer unteren Endlage auf und ab. Im Steg des Schwenkarms 11 ist ein etwa senkrecht verlaufender kreisbogenförmiger Schlitz ausgeführt, durch den die Exzenterachse 15 ragt und der die Schwenkbewegung zuläßt.

Zwischen den vorderen Rändern der Führungsschiene 11 erstreckt sich ein Haltestab 16, an dem ein Ende der Gummimatte 7 befestigt ist. Auf diese Weise spannt sich die Gummimatte beim Ausfahren des Schlittens 4 unter Abwicklung vom Wickel 6 über die Glasplatte mit den auf dieser liegenden Kopierpartnern 3, während sich beim Einwärtsfahren des Schlittens die Matte wieder auf die Walze 5 zum Wickel 6 aufwickelt. Hierzu enthält die Wickelwalze 5 eine geeignete Torsionsfeder oder dergl., die sie mit einem Drehmoment beaufschlagt, welches die Matte aufzuwickeln sucht.

Zum Verfahrantrieb des Schlittens 4 dienen beidseits unterhalb der Führungsschienen 10 verlaufende endlose Antriebsketten 17, die ein vorderes Umlenkrad 18 und ein hinteres Umlenkrad 19 umlaufen. Die Achse der hinteren Umlenkräder 19 kann gleichzeitig als Schwenkachse 12 der Schwenkarme 11 dienen. Eines der Umlenkräderpaare besitzt einen motorischen Antrieb, um den mit dem oberen Trum der Antriebsketten 17 verbundenen Schlitten zwischen seinen Endstellungen hin und her zu verfahren.

Die Glasplatte 2 ist umrahmt von einer Dichtlippe 20, auf die im ausgefahrenen Zustand die Ränder der Gummimatte 2 zu liegen kommen. Innerhalb des so eingerahmten Bereichs sind Saugöffnungen 21 vorgesehen, die ein Evakuieren des Raums unter der ausgefahrenen Gummimatte erlauben. Die Wickelwalze 5 ist im Schlitten 4 mittels einer durch eine Feder angedeuteten Federaufhängung 22 gelagert, die sie nach unten gegen die Glasplatte 2 drückt.

Der Einsatz des beschriebenen Kontaktkopiergeräts verläuft wie folgt:

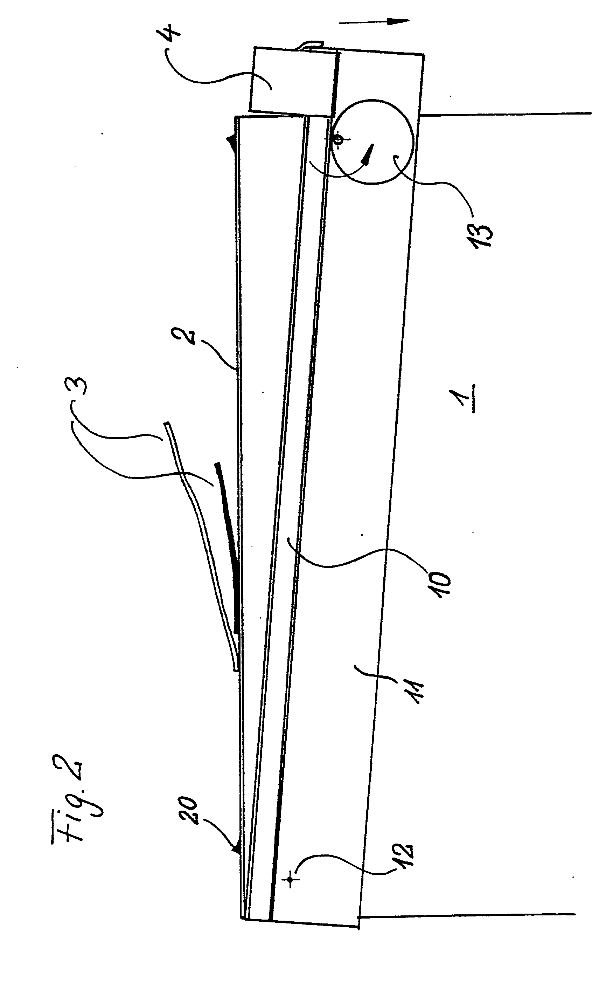

Zunächst befindet sich der Schlitten 4 in seiner vorderen Endstellung in abgesenkter Lage, wie in Fig. 2 ersichtlich. Die vor diesem vorderen Rand stehende Bedienungsperson legt die Kopierpartner 3 auf die Glasplatte 2 auf.

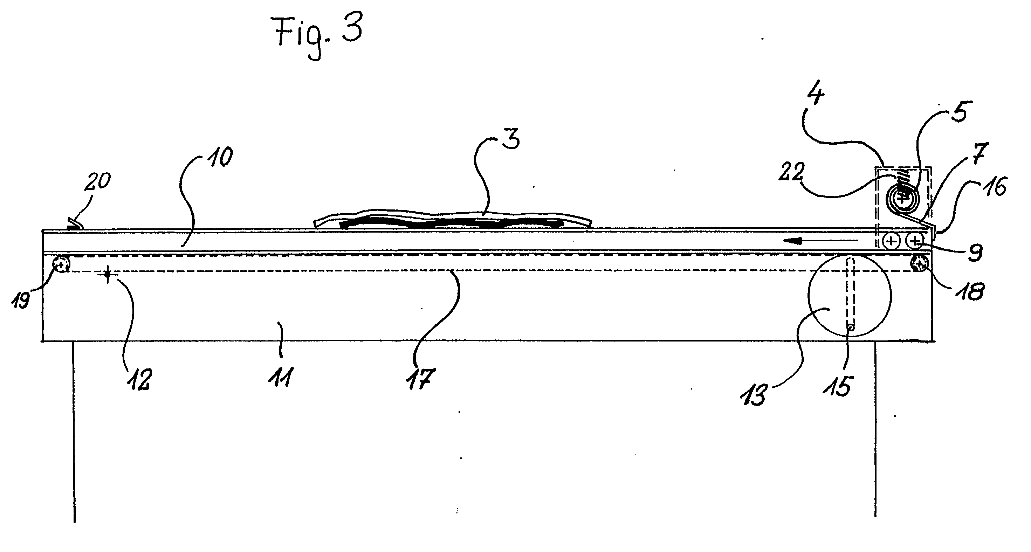

Danach wird eine Programmsteuerung eingeschaltet, die zunächst das Drehen der Exzenter 13 bewirkt, bis die Schwenkarme 11 nach oben geschwenkt sind. Jetzt befindet sich der Schlitten 4 oberhalb der Glasplatte, wie in Fig. 3 ersichtlich.

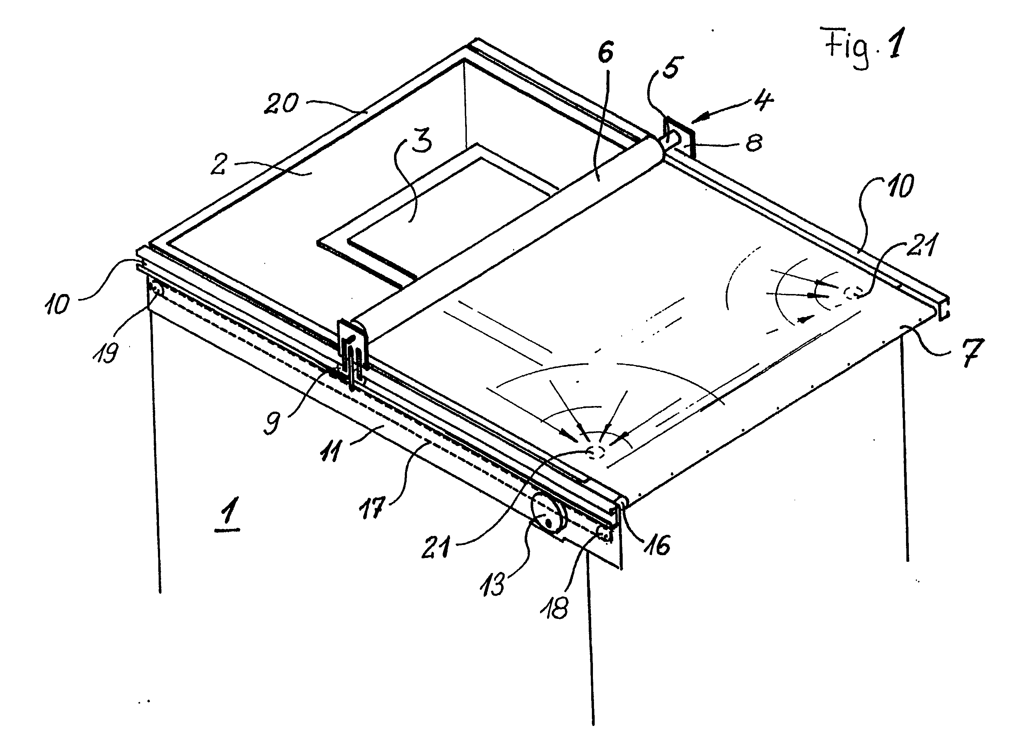

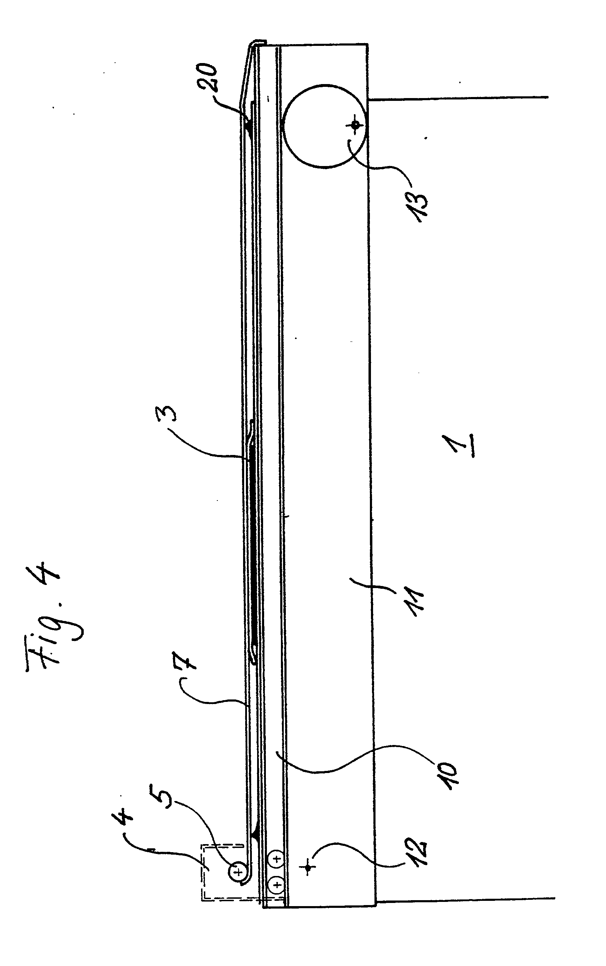

Anschließend wird der Antrieb der Ketten 17 so eingeschaltet, daß der Schlitten 4 ausgefahren wird. Fig. 1 zeigt den Schlitten 4 auf etwa halben Wege, und Fig. 4 zeigt die ausgefahrene Endstellung.

Jetzt wird über die Saugöffnungen 21 ein Unterdruck zwischen die Glasplatte und die Gummimatte eingeleitet, so daß der atmosphärische Druck die letztere und damit auch die zwischenliegenden Kopierpartner 3 an die Glasplatte 2 andrückt. Schon während des Ausfahrens des Schlittens hat der nach unten federbeaufschlagte Mattenwickel 6 die Kopierpartner glattgestrichen und eventuell zwischen ihnen vorhandene Lufttaschen weitgehend ausgestrichen, und jetzt werden diese durch die mit der Evakuierung verbundene Anpressung vollends in innigen Kontakt miteinander und mit der Glasplatte 2 gebracht.

Es erfolgt die Belichtung, wonach das Vakuum aufgehoben und der Schlitten wieder einwärts zurückgefahren wird, wobei sich die Gummimatte 7 wieder aufwickelt. In der vorderen Endstellung des Schlittens wird dieser durch entsprechende Betätigung der Exzenter 13 wieder nach unten geschwenkt, so daß die Bedienungsperson die Kopierpartner jetzt bequem abheben kann.

Es versteht sich, daß die vorstehend konkret benannten Elemente durch äquivalente Elemente ersetzt sein können, z. B. die Glasplatte auch eine Platte aus einem anderen durchsichtigen Material, oder die Gummimatte auch eine Matte aus einem anderen geeigneten flexiblen Material sein kann.

**Patentansprüche**

1. Kontaktkopiergerät zur Aufwärtsbelichtung von auf eine transparente Platte (2) aufzulegenden Kopierpartnern (3) mit einer von einem Wickel (6) abrollbaren Matte (7) aus flexiblem Material, deren Wickelwalze (5) in einem Schlitten (4) gelagert ist, welcher mittels sich längs der transparenten Platte (2) beidseits derselben erstreckender Führungsschienen (10) über den vorderen Rand der transparenten Platte hinaus verfahrbar ist und in dieser Aufrollage auf ein unterhalb der transparenten Platte (2) liegendes Niveau absenkbar ist, dadurch gekennzeichnet, daß die Führungsschienen (10) am Kopiergerätgehäuse (1) in der Nähe von dessen hinterem Rand schwenkbar angelenkt sind und der Schlitten (4) in der oben erwähnten Aufrollage durch Abwärtsschwenken der Führungsschienen (10) absenkbar ist.

2. Kontaktkopiergerät nach Anspruch 1, gekennzeichnet durch je eine unterhalb der Führungsschienen (10) über Umlenkräder (18, 19) verlaufende endlose Antriebskette (17), an der je ein Ende des Schlittens (4) befestigt ist.

3. Kontaktkopiergerät nach Anspruch 1 oder 2, dadurch gekennzeichnet, daß die Führungsschienen (10) von Exzentern (13) schwenkangetrieben sind, welche in der Nähe des vorderen Endes der Führungsschienen an diesen angreifen.

4. Kontaktkopiergerät nach Anspruch 3, dadurch gekennzeichnet, daß die Führungsschienen (10) an Schwenkarmen (11) befestigt sind und diese wenigstens im Bereich der Exzenter (13) einen U-förmigen Querschnitt aufweisen, in dem die Exzenter liegen.

5. Kontaktkopiergerät nach einem der vorhergehenden Ansprüche, dadurch gekennzeichnet, daß die Wickelwalze (5) beidseits in je einer Wange (8) des Schlittens gelagert ist, und jede Wange mittels zweier Tandemschlittenrollen (9) in ihrer Führungsschiene (10) läuft.

6. Kontaktkopiergerät nach einem der vorhergehenden Ansprüche, dadurch gekennzeichnet, daß die Wickelwalze (5) im Schlitten zur transparenten Patte (2) hin federnd gelagert ist.

**Claims**

1. Contact copying device for the upward exposure of copy partners (3) to be placed on a transparent plate (2) with a mat (7) of a flexible material which can be unrolled from a roll (6), the winding roller (5) of which is mounted in a carriage (4) which is outwardly displaceable beyond the front edge of the transparent plate by means of guide rails (10) which stretch along the length of the transparent plate (2) on both sides of it, and in this rolled-up position can be lowered to a level below the transparent plate (2), characterised in that the guide rails (10) are pivoted on the copying device housing (1) near its back edge and the carriage (4) can be lowered in the rolled-up position mentioned above by swivelling the guide rails (10) downwards.

2. Contact copying device according to claim 1, characterised by an endless drive chain (17) running below each of the guide rails (10) respectively via reversing wheels (18, 19), to each of which chains one end of the carriage (4) is attached.

3. Contact copying device according to claim 1 or 2, characterised in that the guide rails (10) are pivotally driven by cams (13), which engage with the guide rails near their front ends.

4. Contact copying device according to claim 3, characterised in that the guide rails (10) are attached to swivel arms (11) and these, at least in the area of the cams (13), have a U-shaped transverse section in which the cams are situated.

5. Contact copying device according to one of the preceding claims, characterised in that the winding roller (5) is mounted on both sides respectively in a side-piece (8) of the carriage, and each side-piece runs in its guide rail (10) by means of two tandem carriage rollers (9).

6. Contact copying device according to one of the preceding claims, characterised in that the winding roller (5) is mounted in the carriage with spring bias towards the transparent plate (2).

## Revendications

1. Copieur à contact, pour l'exposition par éclairage par le dessous d'éléments de copie (3) disposés sur une plaque transparente (2), comprenant un rideau (7) en matière flexible pouvant être déroulé d'une bobine (6) dont le rouleau d'enroulement (5) est monté sur un chariot (4) qui, au moyen de rails de guidage (10) s'étendant le long de la plaque transparente (2), des deux côtés de celle-ci, peut être amené au-delà du bord avant de la plaque transparente et, dans cette position enroulée, peut être abaissé à un niveau situé en dessous de la plaque transparente (2), caractérisé par le fait que les rails de guidage (10) sont articulés sur la carcasse du copieur (1), au voisinage de son bord arrière, de manière à pouvoir pivoter, et le chariot (4) se trouvant à ladite position enroulée peut être abaissé par basculement vers le bas des rails de guidage (10).

2. Copieur à contact selon revendication 1, caractérisé par le fait que des chaînes d'entraînement sans fin (17) passant sur des roues de renvoi (18, 19) s'étendent chacune en dessous de l'un des rails de guidage (10), chaque extrémité du chariot (4) étant fixée à l'une d'elles.

3. Copieur à contact selon revendication 1 ou 2, caractérisé par le fait que les rails de guidage (10) sont entraînés, pour leur mouvement de basculement, par des excentriques (13) qui attaquent ces rails de guidage au voisinage de leur extrémité avant.

4. Copieur à contact selon revendication 3, caractérisé par le fait que les rails de guidage (10) sont fixés à des bras pivotants (11) qui, au moins dans la région des excentriques (13), présentent une section droite en forme de U dans laquelle les excentriques sont situés.

5. Copieur à contact selon l'une des revendications précédentes, caractérisé par le fait que le rouleau d'enroulement (5) est monté de chaque côté dans une joue (8) du chariot, et chaque joue est mobile dans son rail de guidage (10) au moyen de deux galets de chariot (9) en tandem (9).

6. Copieur à contact selon l'une des revendications précédentes, caractérisé par le fait que le rouleau d'enroulement (5) est monté sur le chariot de manière à être sollicité élastiquement vers la plaque transparente (2).

Fig. 1

EP 0 241 658 B1

_Fig. 2_

Fig. 3

EP 0 241 658 B1

# Fig. 4

Fig. 5